# EUROPÄISCHE PATENTSCHRIFT

(11) **EP 1 019 632 B1**
(45) Veröffentlichungstag und Bekanntmachung des Hinweises auf die Patenterteilung: **31.07.2002**
(21) Anmeldenummer: 98954253.5
(22) Anmeldetag: 04.09.1998
(51) Int. Cl.: F03D 1/06

(54) **GERÄUSCHARMES ROTORBLATT UND WINDENERGIEANLAGE MIT SOLCHEN ROTORBLÄTTERN**
QUIET ROTOR BLADE AND WIND ENERGY INSTALLATION EQUIPPED WITH ROTOR BLADES OF THIS TYPE
PALE DE ROTOR SILENCIEUSE ET INSTALLATION EOLIENNE POURVUE DE TELLES PALES DE ROTOR

(30) Priorität: 02.10.1997 DE 19743694
(43) Veröffentlichungstag der Anmeldung: 19.07.2000
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: EP9805615
(87) Internationale Veröffentlichungsnummer: WO9918352

(56) Entgegenhaltungen:
- EP-A- 0 482 932
- DE-A- 4 440 744
- US-A- 4 427 344
- US-A- 5 433 586

## Beschreibung

Die Erfindung betrifft ein Rotorblatt und eine Windenergieanlage mit einem Rotorblatt, wobei das Rotorblatt mit einer Rotorblatthinterkante versehen ist und sich zur Rotorblatthinterkante hin verjüngt.

Rotorblätter für Windenergieanlagen sind in vielfacher Form aus Wagner, Bareiß, Guidati "Wind Turbine Noise", Seite 88, ISBN 3-540-60592-4 bekannt. Leider haftet vielen Rotorblättern aus dem Stand der Technik das Problem an, daß sie in einem nicht unerheblichen Maße bei Betrieb der Windenergieanlage und bei Windstärken ab etwa 5 bis 6 m/s nicht unerhebliche Schallemissionen erzeugen. Die bislang sich einstellenden Schallemissionen führen u.a. dazu, daß Windenergieanlagen aufgrund der Lärmentstehung Widerstände in breiten Bevölkerungsschichten entstehen lassen. Daraus folgt, daß sich Windenergieanlagen teilweise schwer oder gar nicht durchsetzen können, da die Genehmigungsbehörden wegen der bestehenden Umweltauflagen - auch Lärm zählt zur Umweltbelastung - die Genehmigung zur Aufstellung von Windenergieanlagen verweigern. Insbesondere in der Nähe von Wohngebäuden ist es daher aus Lärmschutzgründen, zur Erfüllung der gesetzlichen Vorschriften und zur Erhöhung der Akzeptanz von Windenergieanlagen erwünscht, die genannten erheblichen Schallemissionen zu reduzieren.

Es ist daher das Ziel der vorliegenden Erfindung, die Schallemissionen von Windenergieanlagen zu verringern.

Dieses Ziel wird mit einem Rotorblatt mit den Merkmalen nach Anspruch 1 verwirklicht.

Eine besonders vorteilhafte Ausführungsform der Erfindung zeichnet sich dadurch aus, daß der Grad der Verjüngung des Rotorblattes in bestimmten Abständen in Richtung auf die Rotorblatthinterkante zunimmt. Besonders bevorzugt ist es dabei, daß in den Abständen jeweils Knicke im Querschnitt des Hinterkantenabschnitts des Rotorblattes, d.h. einem der Rotorblatthinterkante benachbarten Abschnitt, gebildet sind und zwischen diesen Knicken dieser Abschnitt des Rotorblattes im wesentlichen eben ist. Bei dieser Form der Erfindung bilden dann die zwischen den Knicken liegenden Ebenen sehr flache Winkel zueinander, so daß sich insgesamt nahezu die Form einer konvex gekrümmten Oberfläche des Querschnitts des Hinterkantenabschnitts des Rotorblattes ergibt.

Bei einer weiteren vorteilhaften Ausführungsform des erfindungsgemäßen Rotorblattes sind drei Knicke im wesentlichen jeweils parallel zur Rotorblatthinterkante verlaufend ausgebildet. Diese Ausführungsform stellt einen optimalen Kompromiß zwischen dem Aufwand bei der Herstellung der Knicke in dem Rotorblatt und einer gewünschten deutlichen Reduzierung des Geräuschpegels des sich bewegenden Rotorblattes dar.

Besonders bevorzugt ist es, däß die in Form von Knicken aneinander grenzenden, schrägen Ebenen, welche die Verjüngung des Rotorblattes in Richtung auf die Rotorblatthinterkante bilden, nur auf einer Seite des Rotorblattes ausgebildet sind. Dabei ist es vorteilhaft, wenn die Knicke nur auf der Saugseite eines eine Druckund eine Saugseite aufweisenden Rotorblattes ausgebildet sind. Auf diese Weise stellt sich eine besonders deutliche Reduzierung der Schallemissionen ein. Dabei hat es sich als zweckmäßig erwiesen, daß die spitzen Winkel, die die zwischen den Knicken liegenden Ebenen der Saugseite des Rotorblattes mit der Druckseite des Rotorblattes bilden, zunehmend spitzer werden. Die Abnahme der Winkelgröße erfolgt dabei von der Rotorblatthinterkante in Richtung auf die Vorderkante des Rotorblattes. Die der Rotorblatthinterkante am nächsten liegende Teilebene der Saugseite bildet dann mit der flachen Druckseite die nahezu scharfe Rotorblatthinterkante.

Mit dem erfindungsgemäßen Rotorblatt versehene Windenergieanlagen zeigen aufgrund der verminderten Schallemission des einzelnen Rotorblattes insgesamt eine deutliche Minderung des abgestrahlten Geräuschpegels. Somit stellen die erfindungsgemäßen Windenergieanlagen eine deutlich geringere Lärmbelästigung für die Bevölkerung dar. Daher werden durch die erfindungsgemäßen Windenergieanlagen die eingangs genannten Nachteile der Windenergieanlagen des Standes der Technik erheblich reduziert, die Akzeptanz von Windenergieanlagen in der Bevölkerung erhöht und bestehende Lärmschutzauflagen leichter erfüllt.

Weitere vorteilhafte Ausführungsformen der Erfindung sind in den Unteransprüchen angegeben.

Die Erfindung wird nachfolgend anhand eines in der anliegenden Zeichnung dargestellten Ausführungsbeispiels näher erläutert. Die Figuren der Zeichnung zeigen in der
- Figur 1: einen Querschnitt durch einen der Rotorblatthinterkante zugewandten hinteren Abschnitt einer Ausführungsform des erfindungsgemäßen Rotorblattes;
- Figur 2: einen Ausschnitt aus Figur 1.

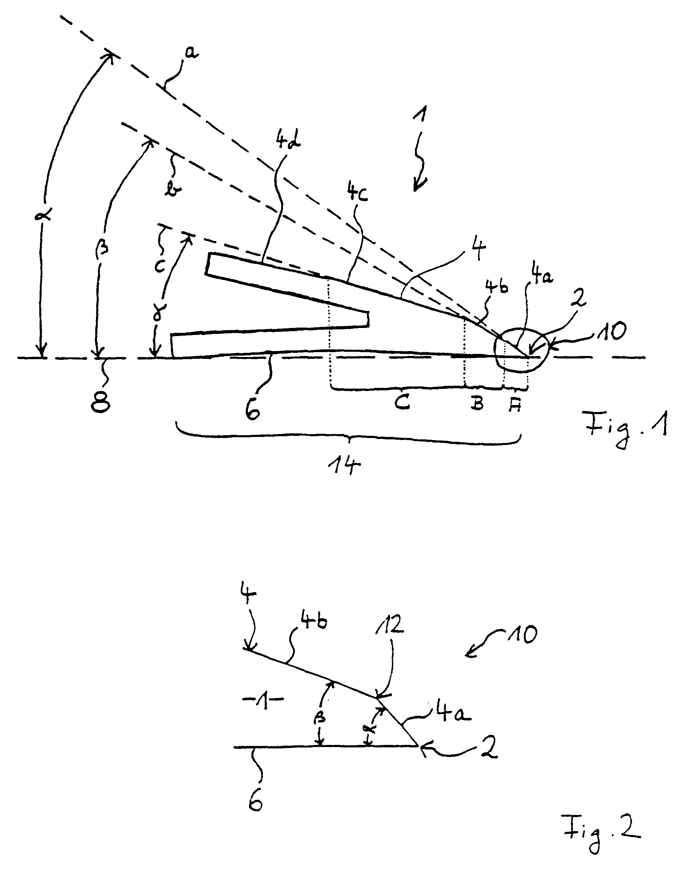

Die Figur 1 zeigt eine Ausführungsform eines erfindungsgemäßen Rotorblattes 1. In der Figur 1 ist nur der hintere Teil des Rotorblattes 1 dargestellt, welcher einer Rotorblatthinterkante 2 benachbart ist. An der Rotorblatthinterkante 2 treffen die beiden Seiten des Rotorblattes 1, eine in der Figur oben dargestellte Saugseite 4 und eine in der Figur unten dargestellte Druckseite 6, aufeinander. Das Aufeinandertreffen der beiden Seiten des Rotorblattes 1 geschieht in einem spitzen Winkel α. Der Winkel α wird gebildet von einer Ebene 8, welche die im wesentlichen flache Druckseite 6 des Rotorblattes 1 enthält und einer schrägen Ebene a. Die Ebene a enthält einen der Rotorblatthinterkante 2 direkt benachbarten Abschnitt 4a der Saugseite 4 des Rotorblattes 1. Der im wesentlichen eben ausgebildete Abschnitt 4a bestimmt daher in einem Abschnitt A den Grad der Verjüngung des Rotorblattes 1 zur Rotorblatthinterkante 2 hin. An den Abschnitt 4a schließt sich ein Abschnitt 4b der Saugseite 4 stufenlos, d.h. ohne Bildung einer treppenartigen Abstufung, an. Der Abschnitt 3 ist Teil einer Ebene b, welche mit der Ebene 8 einen Winkel β bildet. Der Winkel β ist kleiner als der Winkel α, so daß der Abschnitt 4b der Saugseite 4 mit der Druckseite 6 einen spitzeren Winkel einschließt, als dies zwischen dem Abschnitt 4a und der Ebene 8 der Fall ist. Im Bereich B der Figur 1 wird daher der Grad der Verjüngung des Rotorbiattes 1 durch die Steigung des Abschnittes 4b bestimmt. Der Grad der Verjüngung im Bereich B des Abschnittes 4b ist geringer als im Bereich A des Abschnittes 4a. Innerhalb der jeweiligen Bereiche B bzw. A ist der Grad der Verjüngung jedoch nahezu konstant, da die Abschnitte 4b und 4a der Saugseite 4 in sich im wesentlichen eben sind.

Wiederum - in dem oben genannten Sinne - stufenlos sich in Richtung der (nicht dargestellten) Rotorblattvorderkante an den Abschnitt 4b anschließend ist der nächste, ebenfalls als schräge Ebene ausgebildete Abschnitt 4c der Saugseite 4 ausgebildet. Der Abschnitt 4c ist Teil einer Ebene c, welche mit der Ebene 8 einen Winkel γ bildet. Der Winkel γ ist wiederum kleiner als der Winkel β. Der Bereich C des Rotorblattes 1, dessen Ausmaße durch die Länge des Abschnittes 4c der Saugseite 4 bestimmt werden, weist ebenfalls einen nahezu konstanten Grad der Verjüngung des Rotorblattes 1 auf, da der Abschnitt 4c und die in diesem Bereich gegenüberliegende Druckseite 6 ebenfalls im wesentlichen eben sind.

Von der Rotorblatthinterkante 2 her gesehen hinter dem Abschnitt 4c schließt sich ein Abschnitt 4d wiederum stufenlos an. Für den Abschnitt 4d gilt ebenfalls das für die Abschnitte 4a bis 4c Gesagte entsprechend. Je nach den Anforderungen an das Rotorblatt 1 kann die zuvor beschriebene Aneinanderreihung von schrägen Ebenen innerhalb der Saugseite 4, welche zunehmend spitzere Winkel mit der Druckseite 6 einschließen, beliebig fortgesetzt werden. In diesem Zusammenhang sei betont, daß die Zeichnung die tatsächlichen Verhältnisse zur Verdeutlichung stark übertrieben wiedergibt.

In der Figur 2 ist zur weiteren Verdeutlichung ein Ausschnitt 10 der Figur 1 vergrößert dargestellt. Aus der Figur 2 wird insbesondere deutlich, daß zwischen der Schräge 4a und der Schräge 4b keine Abstufung in Form einer Treppenstufe vorhanden ist, sondern die Abschnitte 4a und 4b an einem Knick 12 in der Saugseite 4 aneinandergrenzen. Eberfalls wird deutlich, daß der Winkel α, welcher zwischen dem Abschnitt 4a und der Druckseite 6 liegt, größer ist als der Winkel β, welcher zwischen dem Abschnitt 4b der Saugseite 4 und der Druckseite 6 eingeschlossen ist.

## Patentansprüche

1. Windenergieanlagen-Rotorblatt (1) mit einer Rotorblattkante (2), wobei sich das Rotorblatt zur Rotorblatthinterkante hin verjüngt,
**dadurch gekennzeichnet, daß** im Bereich der Rotorblatthinterkante (2) der Grad der Verjüngung des Rotorblatts in Richtung auf die Rotorblatthinterkante zunimmt, daß der Grad der Verjüngung in Abständen (a, b, c) zunimmt und zwischen den Stellen (12) der Zunahme konstant bleibt.

2. Rotorblatt nach Anspruch 1,
**dadurch gekennzeichnet, daß** der Grad der Verjüngung in Form von mindestens einem Knick (12) in dem Rotorblatt (1) zunimmt.

3. Rotorblatt nach Anspruch 2,
**dadurch gekennzeichnet, daß** der Knick/die Knicke (12) im wesentlichen parallel zur Rotorblatthinterkante (2) verläuft/verlaufen.

4. Rotorblatt nach den Ansprüchen 2 oder 3,
**dadurch gekennzeichnet, daß** drei Knicke (12) vorgesehen sind.

5. Rotorblatt nach einem der Ansprüche 2 bis 4,
**dadurch gekennzeichnet, daß** der Knick/die Knicke (12) nur auf einer Seite (4, 6) des Rotorblattes (1) vorgesehen sind.

6. Rotorblatt nach einem der Ansprüche 2 bis 5,
mit einer Druckseite und einer Saugseite,
**dadurch gekennzeichnet, daß** der Knick/die Knicke (12) nur auf der Saugseite (4) vorgesehen ist/sind.

7. Rotorblatt nach einem der vorstehenden Ansprüche,
mit einem Rotorblatthinterkantenabschnitt (14) des Rotorblattes, welcher der Rotorblatthinterkante (2) benachbart ist,
**dadurch gekennzeichnet, daß** eine Seite (4, 6) des Rotorblatthinterkantenabschnitts (14) im wesentlichen eben ist.

8. Rotorblatt nach dem vorstehenden Anspruch,
**dadurch gekennzeichnet, daß** die im wesentlichen ebene Seite (4, 6) des Rotorblatthinterkantenabschnitts (14) mit der anderen Seite (6, 4), von der Rotorblatthinterkante (2) aus gesehen, in Richtung der Rotorblattvorderkante zunehmend spitzere Winkel (α, β, γ) einschließt.

9. Windenergieanlage mit einem Rotor, welcher eines oder mehrere Rotorblätter (1) nach einem der vorstehenden Ansprüche aufweist.

## Claims

1. A rotor blade (1) having a rotor blade edge (2) for a wind energy installation, the rotor blade tapering towards the rotor-blade rear edge,
**characterised in that**, in the region of the rotor-blade rear edge (2), the degree of taper of the rotor blade increases in the direction of the rotor-blade rear edge, **in that** the degree of taper increases at spacings (a, b, C) and remains constant between the points (12) of the increase.

2. A rotor blade according to Claim 1,
**characterised in that** the degree of taper increases in the form of at least one bend (12) in the rotor blade (1).

3. A rotor blade according to Claim 2,
**characterised in that** the bend(s) (12) extend(s) substantially parallel to the rotor-blade rear edge (2).

4. A rotor blade according to Claim 2 or 3,
**characterised in that** three bends (12) are provided.

5. A rotor blade according to one of Claims 2 to 4,
**characterised in that** the bend(s) (12) is/are provided on only one side (4, 6) of the rotor blade (1).

6. A rotor blade according to one of Claims 2 to 5,
having a pressure side and a suction side,
**characterised in that** the bend(s) (12) is/are provided only on the suction side (4).

7. A rotor blade according to one of the preceding claims,
having a rotor-blade rear edge portion (14) of the rotor blade, which is adjacent to the rotor-blade rear edge (2),
**characterised in that** one side (4, 6) of the rotor-blade rear edge portion (14) is substantially planar.

8. A rotor blade according to the preceding claim,
**characterised in that** the substantially planar side (4, 6) of the rotor-blade rear edge portion (14) forms angles (α, β, γ) with the other side (6, 4), said angles becoming increasingly acute in the direction of the rotor-blade front edge, as seen from the rotor-blade rear edge (2).

9. A wind energy installation having a rotor, which has one or more rotor blades (1) according to one of the preceding claims.

## Revendications

1. Pale de rotor (1) d'installations éoliennes dotée d'un bord de pale de rotor (2), la pale de rotor se rétrécissant en direction du bord intérieur de la pale de rotor, **caractérisée en ce que** le degré de rétrécissement de la pale de rotor augmente en direction du bord arrière de pale de rotor dans la zone du bord arrière de pale de rotor (2), **en ce que** le degré de rétrécissement augmente par intervalles (a,b,c) et reste constant entre les emplacements (12) de l'accroissement.

2. Pale de rotor selon la revendication 1, **caractérisée en ce que** le degré de rétrécissement augmente sous la forme d'au moins une pliure (12) dans la pale de rotor (1).

3. Pale de rotor selon la revendication 2, **caractérisée en ce que** la pliure/les pliures (12) est/sont sensiblement parallèle(s) au bord arrière de pale de rotor (2).

4. Pale de rotor selon les revendications 2 ou 3, **caractérisée en ce qu'**il est prévu trois pliures (12).

5. Pale de rotor selon l'une quelconque des revendications 2 à 4, **caractérisée en ce que** la pliure/les pliures (12) n'est/ne sont prévue(s) que sur un côté (4, 6) de la pale de rotor (1).

6. Pale de rotor selon l'une quelconque des revendications 2 à 5, avec un côté refoulement et un côté admission, **caractérisée en ce que** la pliure/les pliures (12) n'est/ne sont prévue(s) que sur le côté aspiration (4).

7. Pale de rotor selon l'une quelconque des revendications précédentes, avec une partie de bord arrière de pale de rotor (14) de la pale de rotor, qui est voisine du bord arrière de pale de rotor (2), **caractérisée en ce qu'**un côté (4, 6) de la partie de bord arrière de pale de rotor (14) est sensiblement plane.

8. Pale de rotor selon la revendications précédente, **caractérisée en ce que** le côté (4, 6) sensiblement plan de la partie de bord arrière de pale de rotor (14) forme avec l'autre côté (6, 4) des angles (a,b,g) qui sont de plus en plus aigus en direction du bord avant de pale de rotor, vu depuis le bord arrière de pale de rotor (2).

9. Installation éolienne avec un rotor, qui présente une ou plusieurs pales de rotor (1) selon l'une quelconque des revendications précédentes.
